# NEUE EUROPÄISCHE PATENTSCHRIFT

(11) **EP 1 345 802 B2**
(45) Veröffentlichungstag und Bekanntmachung des Hinweises auf die Entscheidung über den Einspruch: **04.11.2020**
(45) Hinweis auf die Patenterteilung: 06.07.2005
(21) Anmeldenummer: 01985425.6
(22) Anmeldetag: 20.12.2001
(51) Int. Cl.: B61K 9/12, G01M 17/10, G01H 1/00, B61L 23/00

(54) **VERFAHREN UND VORRICHTUNG ZUM ÜBERWACHEN DES FAHRVERHALTENS VON SCHIENENFAHRZEUGEN**
METHOD AND DEVICE FOR MONITORING THE DRIVING BEHAVIOUR OF RAIL VEHICLES
PROCEDE ET DISPOSITIF PERMETTANT DE SURVEILLER LE COMPORTEMENT DE CONDUITE DE VEHICULES SUR RAILS

(30) Priorität: 22.12.2000 DE 10065786
(43) Veröffentlichungstag der Anmeldung: 24.09.2003
(73) Patentinhaber: DB Fernverkehr AG, 60326 Frankfurt (DE)
(72) Erfinder: SÄGLITZ, Mario, 12167 Berlin (DE); BRANDENBURG, Lutz, 14467 Potsdam (DE); KLOCKOW, Thomas, 81673 München (DE); SUNDER, Reinhold, 85778 Haimhausen (DE); KOLBASSEFF, Alexander, 83527 Haag-Rosenheim (DE); KIENINGER, Kurt, 81827 München (DE); RÖHM, Andreas, 85764 Oberschlei heim (DE); WALTER, Johannes, 85764 Oberschlei heim (DE); ALDER, Phil, 12557 Berlin (DE); KOLUPA, Jens, 14052 Berlin (DE)
(74) Vertreter: Heusch, Christian
(86) Internationale Anmeldenummer: PCT/EP2001/015116
(87) Internationale Veröffentlichungsnummer: WO 2002/051685

(56) Entgegenhaltungen:
- WO-A-00/09379
- WO-A-00/29270
- WO-A1-00/02022
- DE-A- 19 826 115
- DE-A- 19 826 220
- DE-A1- 4 411 326
- DE-A1- 19 827 271
- DE-C- 19 827 931
- US-A- 5 777 891
- PATENT ABSTRACTS OF JAPAN vol. 1995, no. 10, 30. November 1995 (1995-11-30) & JP 07 174616 A (ONO SOKKI CO LTD), 14. Juli 1995 (1995-07-14)

## Beschreibung

Die Erfindung betrifft ein Verfahren und eine Vorrichtung zum Überwachen des Fahrverhaltens von Schienenfahrzeugen und der Diagnose von Komponenten von Schienenfahrzeugen.

Bekannt ist, das Fahrverhalten von Schienenfahrzeugen während deren bestimmungsgemäßen Einsatz zu überwachen, indem das Fahrverhalten repräsentierende Betriebsparameter des Schienenfahrzeuges erfasst und ausgewertet werden. Hier ist beispielsweise bekannt, das Beschleunigungsverhalten einzelner Komponenten des Schienenfahrzeuges mittels an den Komponenten angeordneter Beschleunigungsaufnehmer zu erfassen. Da aufgrund des bestehenden Rad/Schiene-Kontaktes der Schienenfahrzeuge eine Schwingungsanregung des Schienenfahrzeuges und somit der einzelnen Komponenten erfolgt, kann durch Überwachen des tatsächlichen Schwingungsverhaltens auf Unregelmäßigkeiten geschlossen werden. Bekannt ist, die einzelnen Beschleunigungssignale im Frequenz-, Statistik- und/oder im Zeitbereich auszuwerten. Derartige Verfahren können beispielsweise aus WO 00/29270, JP 07174616 oder DE 198 26 220 entnommen werden. Bei den bekannten Verfahren ist jedoch nachteilig, dass es aufgrund unvorhergesehener äußerer und/oder innerer Einflüsse zu einer Veränderung des Beschleunigungsverhaltens einzelner Komponenten kommt, die dann zu einer entsprechenden Signalauslösung führen. Oftmals sind diese äußeren und inneren Einflüsse nicht identisch mit den eigentlich zu überwachenden Ereignissen, beispielsweise Schäden an einzelnen Komponenten, so dass bei den bekannten Überwachungsverfahren Fehlalarme nicht ausgeschlossen werden können. Aus Gründen der Systemakzeptanz muss jedoch jedem Alarm die maximal mögliche Bedeutung beigemessen werden, so dass hierdurch das Betriebsverhalten der Schienenfahrzeuge entsprechend der Anzahl von Fehlalarmierungen beeinträchtigt ist.
Beispielsweise sind aus dem Automobilbau Diagnosesysteme mit zueinander unterschiedlicher Relevanz der Diagnoseergebnisse bekannt, wie z.B. Diagnosesysteme für Bremsbelagsverschleiss, Reifendruck oder Motorbrand. Bei diesen Diagnose- bzw. Überwachungsverfahren kann es ebenso zu oben geschilderten Fehlalarmen kommen, da die dort erfassten Betriebsparameter in eindimensionaler Weise einer einzigen Überwachunasebene zugeführt werden und die in dieser einen Überwachungsebene angewandten Auswerteverfahren bzw. - algorithmen allfällige auf die Messwert-Erfassung einwirkende Störeinflüsse nicht kompensieren können.

Der Erfindung liegt die Aufgabe zugrunde, ein Verfahren und eine Vorrichtung der gattungsgemäßen Art zu schaffen, mittels denen eine sichere Überwachung des Fahrverhaltens von Schienenfahrzeugen bei minimaler Fehlalarmauslösung möglich ist.

Erfindungsgemäß wird diese Aufgabe durch ein Verfahren mit den im Anspruch 1 und eine Vorrichtung mit den im Anspruch 15 genannten Merkmalen gelöst. Dadurch, dass wenigstens ein Teil der erfassten Betriebsparameter (Messsignale) einer Mehrzahl von Überwachungsebenen einer Überwachungshierarchie parallel zugeordnet und wenigstens zwei derselben Überwachungsebene zugeordnete Betriebsparameter (Messsignale) zur Erzielung das Fahrverhalten und die Komponentendiagnose charakterisierender, ereignisabhängiger Aussagen miteinander verknüpft werden, wobei je nach Zuordnung zu einer der Überwachungsebenen die Betriebsparameter (Messsignale) in den Überwachungsebenen gleichen und/oder unterschiedlichen Auswertealgorithmen unterzogen werden, ist vorteilhaft möglich, eine optimierte Überwachung und Diagnose des Schienenfahrzeuges durchzuführen. Es ist insbesondere möglich, durch die gegebenen Kombinationsmöglichkeiten der Auswahl der einzelnen Betriebsparameter (Messsignale) beziehungsweise der unterschiedlichen Kombinationsmöglichkeiten hinsichtlich der Zuordnung zu den Überwachungsebenen - und damit der Auswahl der Auswertealgorithmen - sich anbahnende Schadensentwicklungen deutlich vor Erreichen kritischer Zustände zu erkennen und somit den sich hieraus ergebenen Zeitgewinn einerseits zur Einleitung von Gegenmaßnahmen und andererseits zur Selbstüberprüfung hinsichtlich des Ausschlusses von Fehlalarmen zu nutzen. In den unterschiedlichen Überwachungsebenen können hierbei gleiche Auswertealgorithmen und/oder unterschiedliche Auswertealgorithmen, beispielsweise im Frequenzbereich und/oder Zeitbereich und/oder im Statistikbereich, zum Einsatz kommen.

Insbesondere ist auch erfindungswesentlich, dass die den unterschiedlichen Betriebsparametern entsprechenden Signale in den unterschiedlichen Überwachungsebenen gegebenenfalls unterschiedlichen Auswertealgorithmen unterworfen werden können. Hierdurch kann eine Anpassung der Auswertung der Signale an die unterschiedlichen Überwachungsebenen in einfacher Weise erfolgen, wobei entsprechend einer notwendigen Reaktionszeit zur Erkennung relevanter Ereignisse entsprechend optimale Auswertealgorithmen herangezogen werden. Es ist besonders auch möglich, wenigstens zwei Betriebsparameter (Messsignale), die gleich oder unterschiedlich sein können, innerhalb einer Überwachungsebene miteinander zu verknüpfen.

Bevorzugte Ausgestaltungen der Erfindung ergeben sich aus den in den Unteransprüchen genannten Merkmalen.

Die Erfindung wird nachfolgend in einem Ausführungsbeispiel anhand der zugehörigen Zeichnungen näher erläutert. Es zeigen:
- Figur 1: schematisch ein Überwachungssystem eines Schienenfahrzeuges;
- Figuren 2 bis 5: Blockschaltbilder der Signalverarbeitung innerhalb einzelner Überwachungsebenen des Überwachungssystems;
- Figur 6: ein Gesamtblockschaltbild der Signalverarbeitungspfade und
- Figur 7: schematisch den Datenfluss im Überwachungssystem innerhalb eines Schienenfahrzeuges.

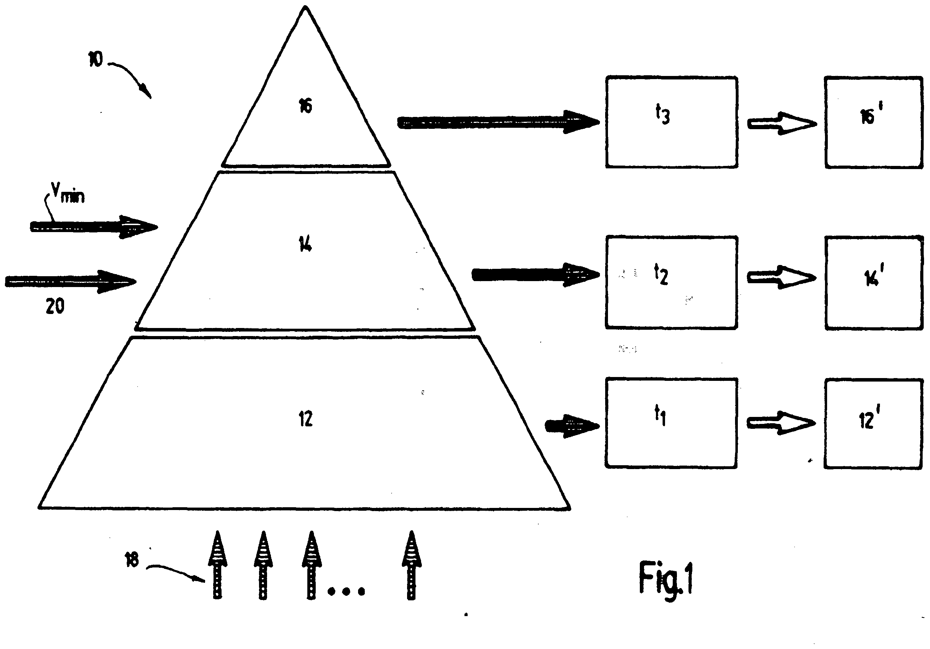

Figur 1 zeigt schematisch ein Überwachungssystem 10 für ein Schienenfahrzeug. Bei dem Schienenfahrzeug kann es sich beispielsweise um einen Wagen eines Hochgeschwindigkeitszuges, beispielsweise einen Mittelwagen, einen Steuerwagen, einen Restaurantwagen oder einen Triebkopf, handeln. Selbstverständlich lässt sich der Gegenstand der Erfindung auch auf andere Schienenfahrzeuge, beispielsweise Güterwagen, Reisezugwagen, Triebfahrzeuge oder dergleichen, übertragen.

Das Überwachungssystem 10 umfasst drei Überwachungsebenen 12, 14 und 16. Die Überwachungsebenen 12, 14 und 16 bauen hierarchisch aufeinander auf. Die erste Überwachungsebene 12 beinhaltet allgemeine Diagnosen zur Erfassung von Schäden, Fehlern oder dergleichen im Anfangsstadium, die im Rahmen von Wartungen, Reparaturen und/oder Instandhaltungen zeitlich unkritisch behoben werden können.

In der Überwachungsebene 14 werden fortgeschrittene Schäden und/oder Fehler erkannt, die gegebenenfalls zu gefährlichen Fahrsituationen des Schienenfahrzeuges führen könnten.

Die Überwachungsebene 16 beinhaltet einen so genannten Aggregateschutz, der beispielsweise Kontaktverluste zwischen Rad/Schiene erkennt, wobei hierbei der Extremfall einer Schienenfahrzeug-Entgleisung eingeschlossen ist.

Dem Überwachungssystem 10 werden hier insgesamt mit 18 bezeichnete Signale zur Verfügung gestellt. Die Signale 18 werden unter anderem von an einzelnen Komponenten des Schienenfahrzeuges angeordneten Beschleunigungssensoren geliefert. Hierbei können die Beschleunigungssensoren beispielsweise Radsatz, Radsatzlager, Drehgestell, Wagenkasten, Feder-/Dämpfersystemen zugeordnet sein. Diese Beschleunigungssensoren detektieren die auf die jeweiligen Komponenten infolge des Rad/Schiene-Kontaktes einwirkenden Beschleunigungen. Hierbei können die Beschleunigungen in allen drei Raumrichtungen, also in Fahrtrichtung, vertikal zur Fahrtrichtung und quer zur Fahrtrichtung, erfasst und ausgewertet werden.

Die Signale 18 umfassen ferner eine Ist-Geschwindigkeit v des Schienenfahrzeuges, eine Kilometerlaufleistung des Schienenfahrzeuges und Temperatursignale, die proportional gemessener Radsatzlagertemperaturen sind. Gegebenenfalls können dem Überwachungssystem auch weitere physikalische Größen, die Betriebsparameter des Schienenfahrzeuges charakterisieren, zugeführt werden. Die Signale 18 stellen somit allesamt momentane dynamische Messgrößen des überwachten Schienenfahrzeuges dar.

In jeder der Überwachungsebenen 12, 14 und 16 werden die dem Überwachungssystem 10 zugeführten Signale 18 unterschiedlichen Auswertealgorithmen unterzogen. Dies betrifft sowohl die Art der Auswertung als auch die Zeitspanne der Auswertung. Hierauf wird im Einzelnen anhand der nachfolgenden Figuren noch näher eingegangen. Die Auswertung der Signale 18 erfolgt dahingehend, ob den Überwachungsebenen 12, 14 oder 16 zuzuordnende Ereignisse erkannt werden. In der unkritischsten Überwachungsebene 12 ist beispielsweise eine Verarbeitungszeit bis zu einer Zeitspanne t₁ von beispielsweise 300 s vorgesehen. Bei Erkennen eines relevanten Ereignisses in der Überwachungsebene 12, erfolgt eine Meldung 12' an die Instandhaltung oder dergleichen. Die Meldung 12' kann beispielsweise mittels Datenfernübertragung abgesetzt werden.

In der Überwachungsebene 14 erfolgt die Bearbeitung der Signale 18 mit einer Verarbeitungszeitspanne t₂, die beispielsweise bis 30 s beträgt. Aufgrund der der Überwachungsebene 14 zuzuordnenden kritischeren Schadensentwicklung ist hier die Verarbeitungszeit schneller. Bei Erkennen eines der Überwachungsebene 14 zuzuordnenden Ereignisses erfolgt eine Meldung 14', die beispielsweise in eine Onboard-Meldung im Schienenfahrzeug, beispielsweise an einen Zugführer, eine Zugleitstelle oder dergleichen, auslöst.

In der kritischsten Überwachungsebene 16 erfolgt die Bearbeitung mit einer entsprechend angepassten Verarbeitungszeit t₃, die beispielsweise bis 0,1 s beträgt. Wird ein der Überwachungsebene 16 zuzuordnendes Ereignis erkannt, erfolgt eine Meldung 16', die direkt oder indirekt einen Eingriff in den Fahrbetrieb des Schienenfahrzeuges, beispielsweise eine Schnellbremsung oder dergleichen, auslöst.

Es wird deutlich, dass aufgrund unterschiedlicher Schadenseskalationsgrade entsprechend der Überwachungsebenen 12, 14, 16 gestaffelte Meldungen 12', 14' beziehungsweise 16' vorgesehen sind. Während die der Überwachungsebene 12 zuzuordnenden Ereignisse zeitlich unkritisch sind, führen der Überwachungsebene 14 zuzuordnende Ereignisse unmittelbar zu Meldungen an ein internes Kommunikationsnetz des Schienenfahrzeuges (bei dem Zugverband an das Kommunikationsnetz des Zuges) mit eventuellen Vorschlägen für durch das Zugpersonal einzuleitende Gegenmaßnahmen. Die Meldungen 16' hingegen lösen sofortige Gegenmaßnahmen aus.

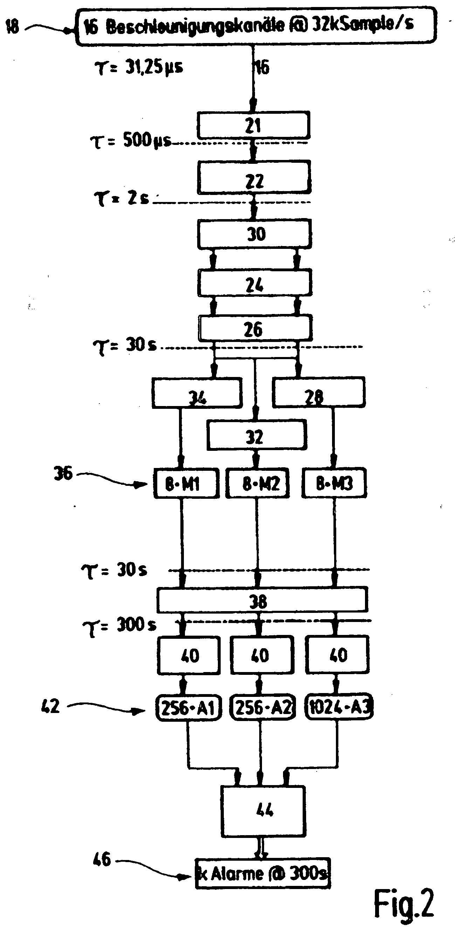

Dem Überwachungssystem 10 werden noch Steuer- beziehungsweise Führungsgrößen zugeführt, die beispielsweise eine Mindestgeschwindigkeit vₘᵢₙ des Schienenfahrzeuges und ein Verknüpfungsalgorithmus 20 (Verknüpfungslogiken 44, 68, 82, Figuren 2 bis 6) der Signale 18 entsprechend der Verarbeitung der Signale in den einzelnen Überwachungsebenen 12, 14 beziehungsweise 16 vorgeben.

Hinsichtlich der in den einzelnen Überwachungsebenen 12, 14 und 16 anzuwendenden Auswertealgorithmen ist Folgendes festzuhalten. In der Überwachungsebene 12 zur Einleitung von Wartungsmaßnahmen sind Verfahren im Frequenzbereich zielführend. Diese besitzen aufgrund der durch Mittelungsprozeduren verbesserten Signalstatistik das Potential, Eigenfrequenzen von Fahrwerken und Schienenfahrzeugen im Fahrbetrieb zu verfolgen und schädigungs- oder verschleißbedingte Veränderungen frühzeitig zu erkennen. Die vom Gleisoberbau herrührenden Anregungseinflüsse stören dabei die Erkennung und Beurteilung der Frequenzlage nicht.

Für die Erkennung von gefährlichen Fahrsituationen in der Überwachungsebene 14 werden beispielsweise statistische Verfahren eingesetzt, die insbesondere bei periodisch auftretenden Stoßimpulsen Aussagen zu Fehlern an Radsatz, Radsatzlagem, Dämpfersystemen oder dergleichen liefern. Mittels dieser Auswertealgorithmen können eskalierende Entwicklungen kurzfristig erkannt werden, um entsprechende Gegenmaßnahmen einzuleiten (Meldung 14').

Die in der Überwachungsebene 16 eingesetzten Auswertealgorithmen sind in der Lage, spontan eintretende Entgleisungen zu detektieren. Hierbei werden Zeitreihenanalysen (Histogrammanalysen) in verschiedenen Geschwindigkeitsklassen durchgeführt.

Figur 2 zeigt in einem Blockschaltbild die Auswertealgorithmen der Signale 18 in der Überwachungsebene 12. Als Ausgangssignale liegen sechzehn Beschleunigungssignale einzelner Komponenten des Schienenfahrzeuges vor. Dies können beispielsweise Beschleunigungssignale vom Radsatzlagergehäuse, Drehgestell oder dergleichen sein. Die Beschleunigungskanäle werden mit einer Abtastrate eingelesen, die an die höchste interessierende Frequenz bei der Zeitverarbeitung angepasst ist, zum Beispiel 32 kHz. Anschließend werden sie digital gefiltert und downgesampelt (Schritt 21). Hierdurch wird das Frequenzband begrenzt und der Rechenaufwand für die Auswertealgorithmen minimiert. Anschließend erfolgt die Bewertung mit einem Hanning-Fenster (Schritt 22), um Verzerrungen im Frequenzbereich zu reduzieren. Anschließend werden mittels einer Spektralanalyse 22 die Amplituden- und Phasenspektren der Signale ermittelt. Dies erfolgt beispielsweise mittels einer Fast-Fourier-Transformation (FFT) mit einer Auflösung von 0,5 Hz. Dies führt bei einem interessierenden Frequenzbereich von 0 bis 1024 Hz zu 4096 erforderlichen Stützstellen für die Fast-Fourier-Transformation, so dass sich ein Erfassungsfenster von 2 s (4096 Stützstellen durch f_{Sample} = 2 s) für eine Einzel-Fast-Fourier-Transformation ergibt. Über einen Zeitraum von 20 s werden Einzelspektren im Zeitbereich überlappend generiert, beispielsweise mit einem Übertappungsgrad von 50 %, so dass die Anzahl der zu mittelnden Einzelspektren neunzehn beträgt. Dieser Vorgang wird mit einem Erfassungstakt von 30 s neu gestartet. Der Überlappungsgrad der Einzelspektren kann hierbei, beispielsweise abweichend von den vorzugsweise 50 %, in den Grenzen zwischen 30 % bis 70 % variiert werden. Im Ergebnis der Spektralanalyse 22 stehen für die Kanäle 16 jeweils zum Beispiel neunzehn Spektren zur Verfügung, von denen durch geeignete Kombination (Schritt 30) die spektralen Auto- und Kreuzleistungen bestimmt (Schritt 24) und anschließend gemittelt (Schritt 26) werden. Auf Basis der Kreuzleistungen werden die gemittelten Phasenspektren 34 bestimmt. Auf Basis der Auto- und Kreuzleistungen werden gemittelte Kohärenzspektren 32 bestimmt. Im Ergebnis dieser Auswertung stehen somit acht Merkmale M₁ (entspricht den Kohärenzspektren 32), acht Merkmale M₂ (entspricht den Phasenspektren 34) und sechzehn Merkmale M₃ (entspricht den Amplitudenspektren 28) zur Verfügung. Somit stehen insgesamt zweiunddreißig Merkmale 36 (8 x M₁ + 8 x M₂ + 16 x M₃) zur Verfügung.

Die Spektren 28, 32 und 34 werden über einen Zeitraum von beispielsweise 120 s (oder wahlweise 180 s, 240 s, 300 s oder 360 s) ermittelt und zwischengespeichert. Die Fahrtgeschwindigkeit v des Schienenfahrzeuges wird einmal zu Beginn und einmal zum Ende eines jeden 20s-Erfassungsfensters gemessen und ebenfalls zwischengespeichert. Eine möglichst geringe Geschwindigkeitsveränderung wird als Kriterium für eine endgültige Archivierung eines aus dem eingestellten Zeitfenster stammenden Spektrums verwendet.

Über eine Auswahlschaltung 38 können innerhalb der vorliegenden Amplitudenspektren 28, Phasenspektren 34 und Kohärenzspektren 32 durch Definition unterer und oberer Bandgrenzen zu überwachende Frequenzbänder (Überwachungsbänder) definiert werden. Innerhalb dieser definierten Frequenzbänder erfolgt eine Auswertung hinsichtlich verschiedener Parameter. Zunächst wird die Frequenz des Maximums (Peak) innerhalb des Frequenzbandes ermittelt. Anschließend wird geprüft, ob der Peak innerhalb der oberen und unteren Frequenzgrenze liegt (Parameter 1 und 2). Verlässt der Peak diesen Frequenzbereich, so wird ein Alarmbit gesetzt. Der Amplitudenwert des Peaks muss innerhalb der definierten Amplitudengrenze liegen (Parameter 3 und 4). Wird der durch die obere und die untere Amplitudengrenze eingestellte Bereich verlassen, so wird ebenfalls ein Alarmbit gesetzt. Im Amplitudenspektrum wird auch der -3dB-Punkt überwacht. Dies ist die Frequenzlinie, die in ihrer Amplitude um 3 dB über dem Peak gedämpft ist. Dieser -3dB-Punkt tritt im Spektrum sowohl links als auch rechts vom Peak auf. Für beide -3dB-Punkte lassen sich die untere und die obere Frequenzgrenze einstellen (Parameter 5 bis 8). Hierdurch wird eine Aussage über die Kurvenform rund um den Peak-Bereich gewonnen. Verlässt der -3dB-Punkt den durch die Grenzen definierten Bereich, so wird ebenfalls ein Alarmbit gesetzt.

Wie dem Blockschaltbild in Figur 2 zu entnehmen ist, ist somit eine Überprüfung 40 der gemittelten Spektren möglich, wobei für die Kohärenzspektren 32 und die Phasenspektren 34 lediglich die Parameter 1 bis 4 aktiviert sind, während für die Amplitudenspektren 28 die Parameter 1 bis 8 aktiviert sind. Die Überwachung 40 auf Grenzwertüberschreitung wird nur auf die für die Archivierung vorgesehenen Amplitudenspektren 28 angewandt. Die aus der Überprüfung der Parameter maximal resultierenden Alarmsignale (Alarmbits) 42 (256 Alarmsignale A₁, 256 Alarmsignale A₂, 1024 Alarmsignale A₃) werden einer Verknüpfungslogik 44 zugeführt, die die Alarmsignale 42 miteinander verknüpft und bei erfüllten Bedingungen zu einer Alarmgebung 46, beispielsweise im eingestellten 300s-Takt, führt.

Es wird deutlich, dass bei den in der Überwachungsebene 12 zum Ansatz kommenden Auswertealgorithmen insbesondere Spektralanalysen und Korrelationen eingesetzt sind.

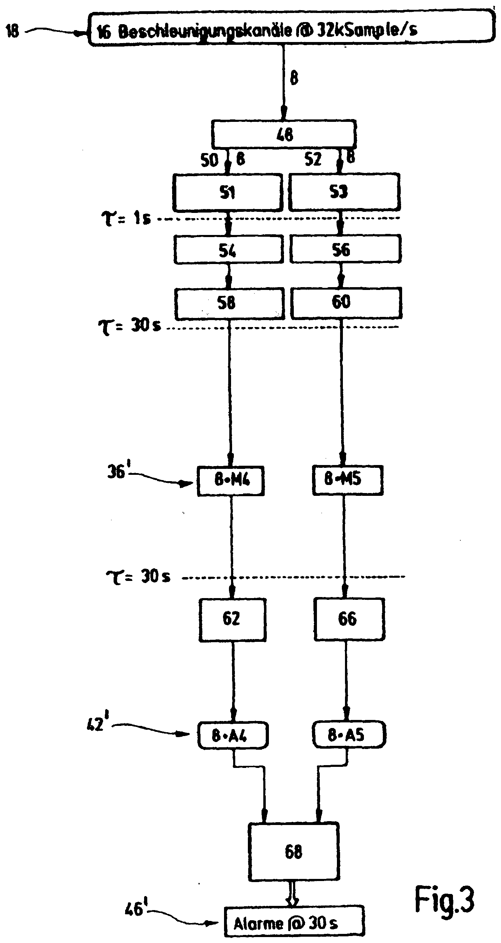

Figur 3 zeigt in einem Blockschaltbild die Auswertealgorithmen der Signale 18 in der Überwachungsebene 14. Als Ausgangssignale liegen wiederum die Beschleunigungssignale einzelner Komponenten des Schienenfahrzeuges vor. Hierbei werden vorzugsweise die jeweils vier Lagersignale von Drehgestellen eines Schienenfahrzeuges ausgewertet, so dass acht der Beschleunigungssignale 18 zur Auswertung gelangen. Diese werden über einen Filter (Splitter) 48 in zwei Subbänder aufgespalten. Das untere Subband (low) 50 geht über einen Bereich von zum Beispiel 0 bis 400 Hz während das obere Subband (high) 52 den Frequenzbereich von zum Beispiel 0,4 bis 16 kHz abdeckt. Von den in den jeweiligen Subbändem 50 und 52 liegenden Samples wird über eine Zeitspanne von 1 s der Mittelwert und die Varianz (Schritte 51 beziehungsweise 53) berechnet. Hieraus wird dann der jeweilige 1-Sekunden-Kurtosiswert errechnet (Schritte 54 beziehungsweise 56). Diese 1-Sekunden-Kurtosiswerte werden über eine Zeitspanne von 30 s anschließend gemittelt (Schritte 58 beziehungsweise 60). Im Ergebnis dieser Auswertung stehen somit acht Merkmale M₄ (Kurtosiswerte im Low-Subband) und acht Merkmale M₅ (Kurtosiswerte im High-Subband) zur Verfügung. Somit stehen hier weitere sechzehn Merkmale 36' (8 x M₄ + 8 x M₅) zur Verfügung.

Anschließend erfolgt für jeden der gemittelten Kurtosiswerte eine Überprüfung auf das Überschreiten von Grenzwerten (Schritte 62 beziehungsweise 66). Überschreitet einer der Kurtosiswerte den vorgebbaren Grenzwert, kann jeweils ein Alarmbit 42' generiert werden. Somit stehen hier acht Alarmsignale A₄ und acht Alarmsignale A₅ zur Verfügung. Diese werden über eine Verknüpfungslogik 68 geführt, die die Alarmsignale 42' miteinander verknüpft und bei erfüllten Bedingungen zu einer Alarmgebung 46', beispielsweise im eingestellte 30s-Takt, führt.

Es wird deutlich, dass bei den in der Überwachungsebene 14 zum Ansatz kommenden Auswertealgorithmen insbesondere statistische Verfahren, wie beispielsweise Kurtosis, zur Anwendung kommen.

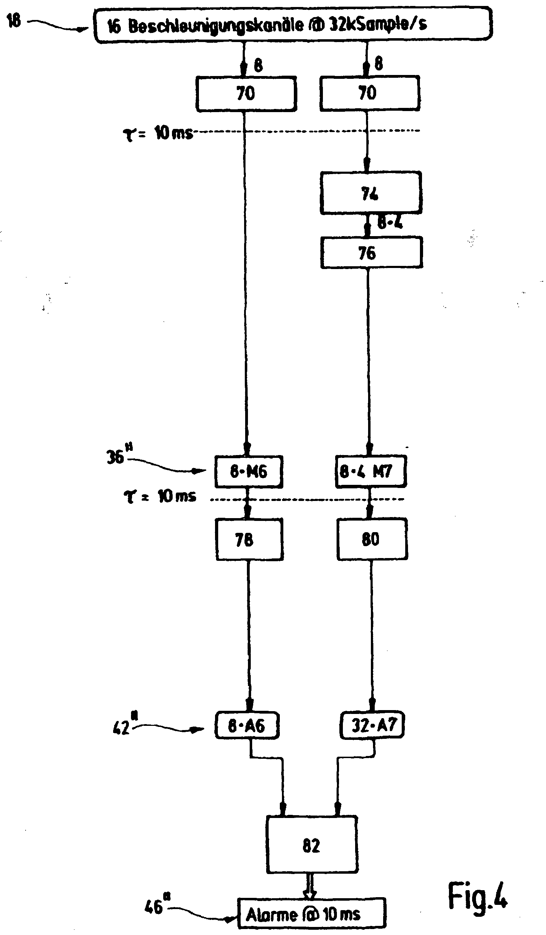

Figur 4 zeigt in einem Blockschaltbild die Auswertealgorithmen der Signale 18 in der Überwachungsebene 16. Als Ausgangssignale liegen wiederum die sechzehn Beschleunigungssignale einzelner Komponenten des Schienenfahrzeuges vor. Für acht dieser Beschleunigungssignale erfolgt die Ermittlung eines Crestfaktors und für weitere acht (die gleichen oder die anderen) Beschleunigungssignale eine Histogrammanalyse. Die Signale sind wiederum, wie bei den vorhergehenden Auswertealgorithmen, mit einer Samplefrequenz von 32 kHz gesampelt.

Bei der Ermittlung des Crestfaktors (Schritt 70) erfolgt die Erfassung der Einzelwerte in 10ms-Zeitfenstern, das heißt in Schüben von 320 Einzelwerten. In diesem Zeitfenster wird jeweils der betragsmäßige Spitzenwert und der RMS-Wert ermittelt und der Quotient aus Spitzenwert und RMS-Wert (Crestfaktor) gebildet. Im Ergebnis dieser Auswertung stehen somit acht Merkmale M₆ (entspricht den Crestfaktoren) zur Verfügung.

Parallel erfolgt die Histogrammanalyse (Schritt 72) für acht Beschleunigungssignale, insbesondere für die jeweils vier Lagersignale der Drehgestelle des Schienenfahrzeuges. Die Erfassung erfolgt ebenfalls in 10ms-Zeitfenstern, das heißt in Schüben von 320 Werten. Aus diesen 320 Werten pro Zeitfenster wird der größte positive und kleinste negative Wert selektiert (Schritt 74) und in das Histogramm 76 eingetragen. Somit fallen pro 10ms-Zeitfenster je überwachtem Beschleunigungssignal zwei Werte an. Bei der Histogrammanalyse wird die Häufigkeit von bestimmten Beschleunigungswerten in vier Geschwindigkeitsklassen überwacht. Pro Geschwindigkeitsklasse und Signal wird ein Histogramm 76 erstellt.

Durch die Crestfaktoranalyse stehen somit acht Merkmale M₆ und durch die Histogrammanalyse zweiunddreißig Merkmale M₇ zur Verfügung. Somit stehen in der Überwachungsebene 16 insgesamt vierzig Merkmale 36" (8 x M₆ + 32 x M₇) zur Verfügung.

Die einzelnen Merkmale werden auf Überschreitung eines Schwellwertes überwacht. Die infolge der Histogrammanalyse erzielten Merkmale werden auf das Überschreiten eines symmetrischen Schwellwertes überwacht. Dieser symmetrische Schwellwert ist als Parameter einstellbar. Da die Erfassung der Geschwindigkeit in 1s-Schritten erfolgt, gehören jeweils die in diesen 100x10ms-Zeitfenstem erfassten Werte zur gleichen Geschwindigkeitsklasse. Die Beschleunigungswerte werden geschwindigkeitsklassenabhängig in ihrer Größe überwacht. Wird ein einstellbarer Maximalwert überschritten beziehungsweise wird der Schwellwert des Crestfaktors überschritten, liegt ein Signalalarm vor. Die aus dieser Überprüfung 78 beziehungsweise 80 maximal resultierenden Alarmsignale (Alarmbits) 42" (acht Alarmsignale A₆, zweiunddreißig Alarmsignale A₇) werden einer Verknüpfungslogik 82 zugeführt, die die Alarmsignale 42" miteinander verknüpft und bei erfüllten Bedingungen zu einer Alarmgebung 46", beispielsweise im eingestellten 10ms-Takt, führt.

Es wird deutlich, dass bei den in der Überwachungsebene 16 zum Ansatz kommenden Auswertealgorithmen insbesondere Crestfaktor- beziehungsweise Histogrammanalysen eingesetzt sind.

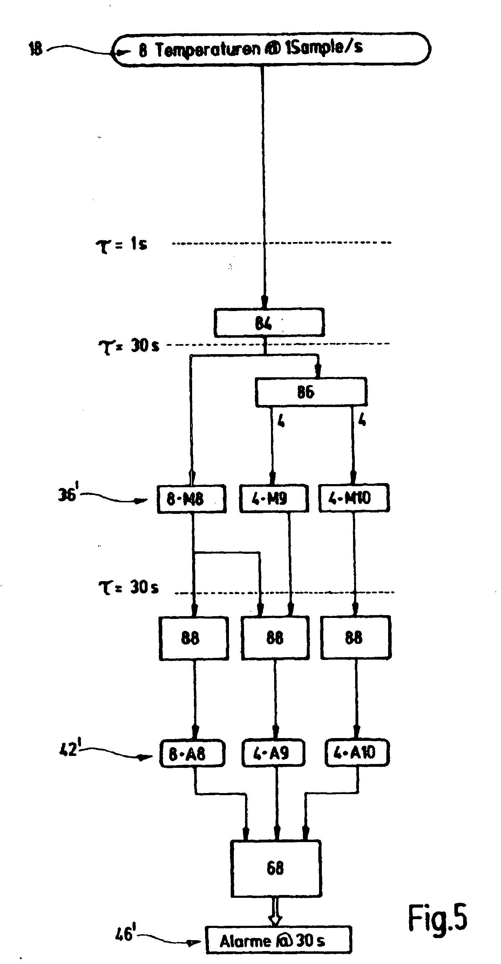

Figur 5 zeigt in einem Blockschaltbild die Auswertealgorithmen der Temperatursignale, die in der Gesamtmenge der Signale 18 zur Verfügung stehen. Die Überwachung der Temperaturen erfolgt in der Überwachungsebene 14, da über die Temperaturüberwachung so genannte Heißläufer erkannt werden können, die infolge von Lagerschädigungen im Frühstadium entstehen können.

Die der gemessenen Temperatur der einzelnen Lagerhalbschalen entsprechenden Temperatursignale werden in 1s-Schritten erfasst und in einem Zeitfenster von 30 s gemittelt (Schritt 84). Diese somit zur Verfügung stehenden acht gemittelten Temperaturwerte bilden die Merkmale M₈. Ferner werden Differenzen (Schritt 86) zwischen den gemittelten Temperatursignalen eines Drehgestells und der jeweiligen Temperatur einer einzelnen Lagerhalbschale ermittelt, so dass weitere vier Merkmale M₉ (Drehgestell 1) und weitere vier Merkmale M₁₀ (Drehgestell 2) jeweils einer Grenztemperatur ΔT = T_{individuell} - Tₘᵢₜₜₑₗ entsprechend zur Verfügung stehen. Somit stehen insgesamt weitere sechzehn Merkmale 36' in der Überwachungsebene 14 zur Verfügung.

Die Merkmale 36' werden anschließend auf eine Grenzwertüberschreitung einer drehgestellspezifisch vorgebbaren Maximaltemperatur geprüft. Als weiteres Überwachungskriterium dient die Differenz der Individualtemperatur eines Lagers und der gemittelten Temperatur aller Lagerhalbschalen eines Drehgestelles, die ebenfalls einen bestimmten Grenzwert nicht überschreiten darf. Die in der Signalverarbeitung ermittelte lagerspezifische Temperaturabweichung ΔT wird auf einen Schwellwert überwacht, der als Parameter einstellbar ist. Ferner ist die drehgestellspezifische Maximaltemperatur Tₘₐₓ als Alarmparameter programmierbar. Entsprechend dieser vorgebbaren Schwellwerte erfolgt die Überprüfung 88 dahingehend, ob die Temperatur T_{individuell} > Tₘₐₓ oder die Temperatur T_{individuell} > Tₘᵢₜₜₑₗ + ΔT_{grenz} ist. Die aus der Überprüfung der Parameter maximal resultierenden Alarmsignale 42' (acht Alarmsignale A₈, vier Alarmsignale A₉, vier Alarmsignale A₁₀) werden der Verknüpfungslogik 68 zugeführt, die die Alarmsignale miteinander verknüpft und bei erfüllten Bedingungen zu einer Alarmgebung 46', beispielsweise im eingestellten 30s-Takt, führt.

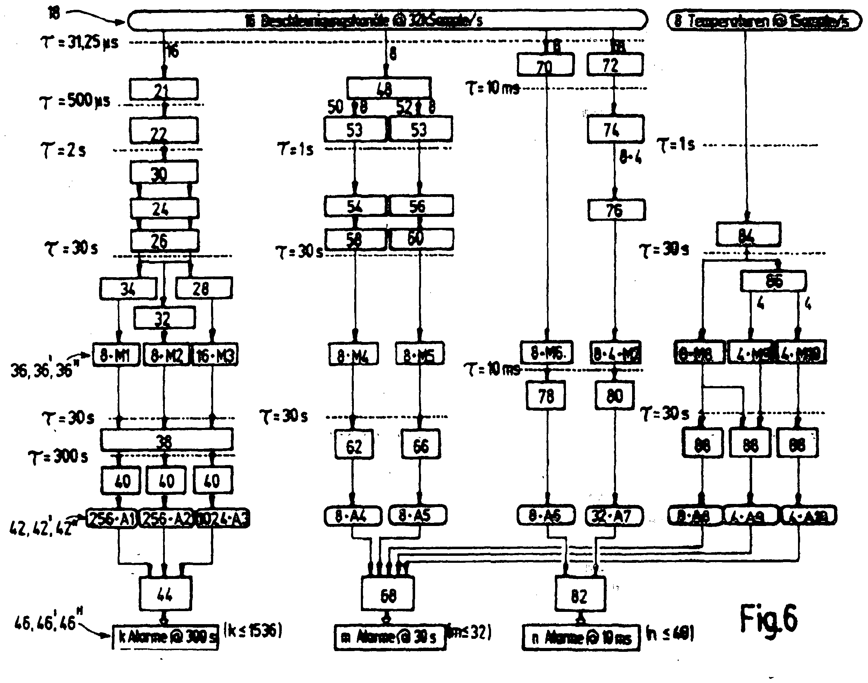

Figur 6 zeigt in einem Blockschaltbild das gesamte Überwachungssystem 10 mit den Auswertealgorithmen in den Überwachungsebenen 12, 14 und 16. Insgesamt ergibt sich somit folgende zusammengefasste Signalverarbeitung beziehungsweise Ermittlung von Merkmalen, Alarmbits und über die Verknüpfungslogiken ausgelöste Alarme. Im Einzelnen sind diese Vorgehensweisen bereits anhand der vorhergehenden Figuren erläutert worden.

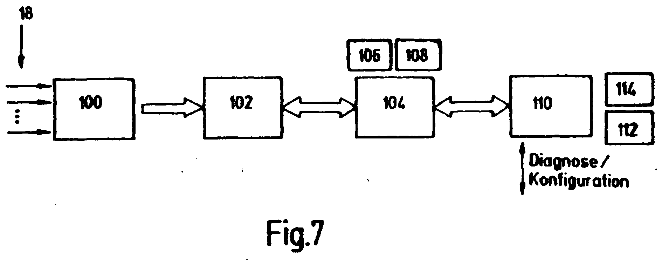

Bei zwei Drehgestellen pro Waggon mit jeweils acht Kanälen ergeben sich sechzehn Beschleunigungskanäle pro System. Die Geschwindigkeit v wird für das Gesamtsystem einmal erfasst. Pro Drehgestell existieren vier Temperaturkanäle, das heißt pro Waggon acht Temperaturkanäle. Die Zusammenstellung in Figur 7 setzt sich aus den bereits beschriebenen Diagnoseaufgaben der Figuren 3 bis 6 zusammen und zeigt nochmals die gewählte Form des Meldekonzepts über logische Verknüpfungen in den drei unterschiedlichen Signalverarbeitungs-Szenarien mit an die Aufgabenstellung angepassten Reaktionszeiten.

Die Überprüfung auf Grenzwertverletzungen erfolgt bei der Frequenzbereichsüberwachung nach erfolgter Spektrenselektion in einstellbaren Zeitfenstern (120 beziehungsweise 180/240/300/360 Sekunden). Angewandt wird die Überwachung auf sechzehn Beschleunigungssignale sowie acht Kohärenz- und Phasenkombinationen je Fahrzeug. Bei den Amplitudenspektren sind acht Überwachungsbänder und acht Parameter (2 x Amplitude, 2 x Frequenz, 4 x Dämpfung), das heißt 1024 Alarmbits pro Fahrzeug, bei den Kohärenz-/Phasensignalen (2 x Amplitude / 2 x Frequenz) entsprechend 256 Alarmbits pro Fahrzeug vorhanden. Maximal können bei der Frequenzüberwachung acht frei wählbare Alarmbits verknüpft werden und lösen nach Abprüfung durch ein Zeitglied eine externe Alarmgebung aus. Das Zeitglied stellt sicher, dass nur über das Verknüpfungsergebnis zweier aufeinander folgender abgespeicherter Messungen (Spektrenermittlungen) eine Alarmbedingung erfüllt ist, um einen Alarm nach extern weiterzugeben.

Bei der Messdatenerfassung im Zeitbereich erfolgt die Datenerfassung und Signalalarmüberprüfung für Histogramm und Crestfaktor alle 10 ms. Angewandt wird diese Vorgehensweise auf die acht Lagersignale eines Fahrzeuges. Pro Fahrzeug werden vierzig Alarmbits gesetzt.

Bei der Kurtosisüberwachung stehen alle 30 Sekunden neue Wertepaare zur Überwachung bereit. Bei Anwendung auf die beiden Frequenzbereiche (high/low) der acht Lagersignale eines Fahrzeuges stehen sechzehn Alarmbits zur Verfügung.

Im direkten Zusammenhang mit der Lagerschwingungsüberwachung mittels Kurtosis steht die Überwachung der Lagertemperaturen. Jede Lagertemperatur wird auf zwei Alarmbedingungen hin abgeprüft (Tₘₐₓ und ΔT_{grenze}). Somit stehen pro Fahrzeug sechzehn Alarmbits zur Verfügung. Das Ergebnis der Lagertemperaturüberwachung liegt dabei ebenfalls im 30s-Zeittakt wie die Kurtosisüberwachung vor, das heißt, bei der Verknüpfung von Kurtosis und Temperaturalarmen wird keine Verwaltung unterschiedlicher Zeittakte notwendig. Die ermittelten Alarmbits werden in ein Kurtosis-Temperatur-Signalalarmfile geschrieben, welches alle 30 Sekunden aktualisiert wird. Die Signalalarme werden im Logikeditor verknüpft und führen bei erfüllter Bedingung zur Alarmgebung.

Figur 7 zeigt schematisch den Aufbau des Überwachungssystems 10. Das Überwachungssystem 10 ist modular aufgebaut, so dass eine separate Inbetriebnahme (der einzelnen Überwachungsebenen 12, 14 und 16) sowie ein schneller Austausch einzelner der Komponenten sowie die Möglichkeit einer individuellen Anpassung an andere Bedingungen möglich ist. Die Signale 18 der nicht dargestellten Sensoren werden über eine Signalkonditionierung 100 an die Eingangsbereiche von Analog/Digital-Umsetzern 102 angepasst. Die Analog/Digital-Umsetzer 102 sind entsprechend der erforderlichen Kanalanzahl der zu verarbeitenden Signale und der Umsetzrate von 32 kSamples pro Sekunde realisiert. Die Analog/Digital-Umsetzer sind an einen digitalen Signalprozessor (DSP) 104 angeschlossen, in dem die Signalverarbeitung beziehungsweise -bearbeitung, die Merkmalsextraktion, die Grenzwertevergleiche sowie die Alarmgebung - entsprechend der Erläuterung zu den vorhergehenden Figuren - realisiert ist. Dem digitalen Signalprozessor 104 ist ein Flash-Speicher 106 zum Laden des Programmes und ein externer Speicher 108 zum Ablegen der Daten zugeordnet. Die Ablaufsteuerung des digitalen Signalprozessors 104 erfolgt durch ein Rechensystem 110, dem für eine temporäre Speicherung der Messdaten eine Flash-Speicherdisc 112 zugeordnet ist. Ferner ist dem Rechensystem 110 ein Festplattenspeicher 114 zugeordnet. Durch diese Ausstattung wird ermöglicht, während des bestimmungsgemäßen Einsatzes des Schienenfahrzeuges die Daten während der Fahrt auf den Flash-Speicher 112 zu schreiben und erst im Stillstand des Schienenfahrzeuges eine Umschreibung der Daten (Kopieren) auf den Festplattenspeicher 114 vorzunehmen. Hierdurch wird die Datensicherheit des Überwachungssystems 10 erhöht. Die Größe des Flash-Speichers 112 muss hierbei der maximalen Fahrzeit des Schienenfahrzeuges angepasst sein und kann nach jedem erfolgten Überspielen auf den Festplattenspeicher 114 neu beschrieben werden.

Es wird deutlich, dass durch die Systemlösung ein sicherer Betrieb des Überwachungssystems 10 im mobilen Bereich unter Einhaltung erhöhter Anforderungen an Robustheit, Stabilität und Energieeffizienz möglich ist.

## Patentansprüche

1. Verfahren zum Überwachen des Fahrverhaltens von Schienenfahrzeugen und der Diagnose von Komponenten von Schienenfahrzeugen, wobei gleiche und unterschiedliche Betriebsparameter, d.h. Messsignale, des Schienenfahrzeuges beziehungsweise von Komponenten des Schienenfahrzeuges während dessen bestimmungsgemäßen Einsatzes erfasst und ausgewertet werden, **dadurch gekennzeichnet, dass** wenigstens ein Teil der erfassten Betriebsparameter einer Mehrzahl von Überwachungsebenen einer Überwachungshierarchie parallel zugeordnet und wenigstens zwei derselben Überwachungsebene zugeordnete Betriebsparameter (Messsignale) zur Erzielung das Fahrverhalten und die Komponentendiagnose charakterisierender, ereignisabhängiger Aussagen miteinander verknüpft werden, wobei je nach Zuordnung zu einer der Überwachungsebenen die Betriebsparameter in den Überwachungsebenen gleichen und/oder unterschiedlichen Auswertealgorithmen unterzogen werden.

2. Verfahren nach Anspruch einem der vorgehenden Ansprüche, **dadurch gekennzeichnet, dass** drei Überwachungsebenen (12, 14, 16) vorgesehen sind.

3. Verfahren nach einem der vorhergehenden Ansprüche, **dadurch gekennzeichnet, dass** in der ersten Überwachungsebene (12) allgemeine Diagnosen zur Erfassung von Schäden, Fehlern oder dergleichen durchgeführt werden.

4. Verfahren nach Anspruch 3, **dadurch gekennzeichnet, dass** in der Überwachungsebene (12) die den Betriebsparametern entsprechenden Signale Frequenzauswerteverfahren, insbesondere Spektralanalysen, Korrelationen oder dergleichen, unterzogen werden.

5. Verfahren nach einem der vorhergehenden Ansprüche, **dadurch gekennzeichnet, dass** in der zweiten Überwachungsebene (14) zu risikobehafteten Fahrsituationen führende fortgeschrittene Schäden, Fehler oder dergleichen erkannt werden.

6. Verfahren nach Anspruch 5, **dadurch gekennzeichnet, dass** in der Überwachungsebene (14) die den Betriebsparametern entsprechenden Signale statistischen Auswerteverfahren, insbesondere Kurtosiswertermittlungen, unterzogen werden.

7. Verfahren nach einem der vorhergehenden Ansprüche, **dadurch gekennzeichnet, dass** in der dritten Überwachungsebene (16) ein Aggregateschutz erfolgt.

8. Verfahren nach Anspruch 7, **dadurch gekennzeichnet, dass** in der Überwachungsebene (16) die den Betriebsparametern entsprechenden Signale Zeitbereichsauswerteverfahren, insbesondere Crestfaktor- und Histogrammanalyse, unterzogen werden.

9. Verfahren nach einem der vorhergehenden Ansprüche, **dadurch gekennzeichnet, dass** als Betriebsparameter Beschleunigungssignale von Komponenten des Schienenfahrzeuges, Temperatursignale von Komponenten des Schienenfahrzeuges, ein Ist-Geschwindigkeitssignal des Schienenfahrzeuges, eine Kilometerlaufleistung des Schienenfahrzeuges erfasst werden.

10. Verfahren nach einem der vorhergehenden Ansprüche, **dadurch gekennzeichnet, dass** die Auswertung der Betriebsparameter in den unterschiedlichen Überwachungsebenen mit einer unterschiedlichen Zeitdauer erfolgt.

11. Verfahren nach einem der vorhergehenden Ansprüche, **dadurch gekennzeichnet, dass** alle in einer Überwachungsebene (12, 14, 16) auftretenden Fehlersignale jeweils einer Verknüpfungslogik (44, 68, 82) zur Gewinnung von Alarmmeldungen (12', 14', 16') zugeführt werden.

12. Verfahren nach einem der vorhergehenden Ansprüche, **dadurch gekennzeichnet, dass** eine Mindestgeschwindigkeit des Schienenfahrzeuges als Führungsgröße fungiert.

13. Verfahren nach einem der vorhergehenden Ansprüche, **dadurch gekennzeichnet, dass** die Signale, die Auswertungen und/oder die Meldungen über eine wählbare Zeitspanne gespeichert werden.

14. Verfahren nach Anspruch 13, **dadurch gekennzeichnet, dass** die Speicherung der Daten während einer Fahrt des Schienenfahrzeuges auf einem Zwischenspeicher erfolgt und bei Stillstand des Schienenfahrzeuges die Daten auf einem Festplattenspeicher oder dergleichen umgeschrieben werden.

15. Vorrichtung zum Überwachen des Fahrverhaltens von Schienenfahrzeugen und der Diagnose von Komponenten von Schienenfahrzeugen, **gekennzeichnet durch** erste Mittel zum Erfassen von Betriebsparametern des Schienenfahrzeuges beziehungsweise von Komponenten des Schienenfahrzeuges, zweite Mittel zum parallelen Zuordnen der Betriebsparameter zu verschiedenen Überwachungsebenen (12, 14, 16) eines Überwachungssystems (10), in den Überwachungsebenen (12, 14, 16) gleiche und/oder unterschiedliche Auswertealgorithmen der den Betriebsparametern entsprechenden Signale ermöglichende dritte Mittel sowie vierte Mittel zum Generieren von der Auswertung in den Überwachungsebenen (12, 14, 16) zugeordneten Meldungen (12', 14', 16') beziehungsweise Aktionen.

## Claims

1. A method for monitoring the running behavior of rail vehicles and for diagnosing components of rail vehicles, wherein identical or different operating parameters, i.e., measuring signals, of the rail vehicle and of components of the rail vehicle, respectively, are acquired and evaluated during the intended use thereof, **characterized in that** at least some of the acquired operating parameters (measuring signals) are assigned to several monitoring levels of a monitoring hierarchy in a parallel fashion and at least two operating parameters (measuring signals) assigned to the same monitoring level are combined with one another in order to obtain event-dependent information that characterizes the running behavior and the component diagnosis, wherein the operating parameters (measuring signals) are subjected to identical and/or different evaluation algorithms in the monitoring levels depending on the assignment to one of the monitoring levels.

2. The method according to one of the preceding claims, **characterized in that** three monitoring levels (12, 14, 16) are provided.

3. The method according to one of the preceding claims, **characterized in that** general diagnoses for detecting damages, defects or the like are carried out in the first monitoring level (12).

4. The method according to Claim 3, **characterized in that** the signals corresponding to the operating parameters are subjected to frequency evaluation methods, particularly spectral analyses, correlations or the like, in the monitoring level (12) .

5. The method according to one of the preceding claims, **characterized in that** advanced damages, defects or the like that could lead to hazardous driving situations are detected in the second monitoring level (14).

6. The method according to Claim 5, **characterized in that** the signals corresponding to the operating parameters are subjected to statistical evaluation methods, particularly kurtosis value determinations, in the monitoring level (14).

7. The method according to one of the preceding claims, **characterized in that** an aggregate protection is realized in the third monitoring level (16).

8. The method according to Claim 7, **characterized in that** the signals corresponding to the operating parameters are subjected to time domain evaluation methods, particularly crest factor analyses and histogram analyses, in the monitoring level (16).

9. The method according to one of the preceding claims, **characterized in that** the operating parameters are acquired in the form of acceleration signals of components of the rail vehicle, temperature signals of components of the rail vehicle, an actual speed signal of the rail vehicle and a kilometric performance of the rail vehicle.

10. The method according to one of the preceding claims, **characterized in that** the evaluation of the operating parameters is carried out over different durations in the different monitoring levels.

11. The method according to one of the preceding claims, **characterized in that** all alarm signals occurring in one monitoring level (12, 14, 16) are respectively fed to a logic element (44, 68, 82) in order to generate alarm messages (12', 14', 16').

12. The method according to one of the preceding claims, **characterized in that** a minimum speed of the rail vehicle is used as a reference variable.

13. The method according to one of the preceding claims, **characterized in that** the signals, the evaluations and/or the messages are stored for a selectable duration.

14. The method according to Claim 13, **characterized in that** the data is stored in an intermediate memory while the rail vehicle is in motion and transferred to a hard-disk storage or the like when the vehicle is at a standstill.

15. A device for monitoring the running behavior of rail vehicles and for diagnosing components of rail vehicles, **characterized in that** first means are provided for acquiring operating parameters of the rail vehicle and of components of the rail vehicle, respectively, **in that** second means are provided for parallel assigning the operating parameters to different monitoring levels (12, 14, 16) of a monitoring system (10), **in that** third means are provided for subjecting the signals corresponding to the operating parameters to identical and/or different evaluation algorithms in the monitoring levels (12, 14, 16), and **in that** fourth means are provided for triggering messages (12', 14', 16') or actions assigned to the evaluation in the monitoring levels (12, 14, 16).

## Revendications

1. Procédé de surveillance des caractéristiques de circulation de véhicules ferroviaires et de diagnostic de composants de véhicules ferroviaires, des paramètres de fonctionnement identiques et différents, c'est-à-dire des signaux de mesure, du véhicule ferroviaire ou de composants du véhicule ferroviaire étant enregistrés et exploités pendant son usage conforme à sa destination, **caractérisé en ce qu'**au moins une partie des paramètres de fonctionnement enregistrés d'une pluralité de niveaux de surveillance sont associés parallèlement à une hiérarchie de surveillance et au moins deux paramètres de fonctionnement (signaux de mesure) associés au même niveau de surveillance sont rattachés l'un à l'autre pour obtenir des informations liées aux incidents et caractérisant les caractéristiques de circulation et le diagnostic des composants, les paramètres de fonctionnement des niveaux de surveillance étant soumis à des algorithmes d'exploitation identiques et/ou différents en fonction de l'association à un des niveaux de surveillance.

2. Procédé selon l'une quelconque des revendications précédentes, **caractérisé en ce qu'**il est prévu trois niveaux de surveillance (12, 14, 16).

3. Procédé selon l'une quelconque des revendications précédentes, **caractérisé en ce que**, dans le premier niveau de surveillance (12), des diagnostics généraux pour l'enregistrement de détériorations, anomalies ou similaires sont réalisés.

4. Procédé selon la revendication 3, **caractérisé en ce que**, dans le niveau de surveillance (12), les signaux correspondant aux paramètres de fonctionnement sont soumis à des procédés d'exploitation de fréquence, notamment des analyses spectrales, des corrélations ou similaires.

5. Procédé selon l'une quelconque des revendications précédentes, **caractérisé en ce que**, dans le deuxième niveau de surveillance (14), les détériorations, anomalies ou similaires avancées entraînant des situations de circulation à risques sont détectées.

6. Procédé selon la revendication 5, **caractérisé en ce que**, dans le niveau de surveillance (14), les signaux correspondant aux paramètres de fonctionnement sont soumis à des procédés d'exploitation statistiques, notamment des déterminations de valeur de kurtose.

7. Procédé selon l'une quelconque des revendications précédentes, **caractérisé en ce qu'**une protection des agrégats a lieu dans le troisième niveau de surveillance (16).

8. Procédé selon la revendication 7, **caractérisé en ce que**, dans le niveau de surveillance (16), les signaux correspondant aux paramètres de fonctionnement sont soumis à des procédés d'exploitation de plage temporelle, notamment à une analyse de facteur de crête et d'histogramme.

9. Procédé selon l'une quelconque des revendications précédentes, **caractérisé en ce qu'**on enregistre comme paramètres de fonctionnement les signaux d'accélération de composants du véhicule ferroviaire, les signaux de température de composants du véhicule ferroviaire, un signal de vitesse réelle du véhicule ferroviaire, une performance kilométrique du véhicule ferroviaire.

10. Procédé selon l'une quelconque des revendications précédentes, **caractérisé en ce que** l'exploitation des paramètres de fonctionnement a lieu avec une durée différente dans les différents niveaux de surveillance.

11. Procédé selon l'une quelconque des revendications précédentes, **caractérisé en ce que** tous les signaux d'anomalies se produisant dans un niveau de surveillance (12, 14, 16) sont communiqués respectivement à une logique de rattachement (44, 68, 62) pour créer des messages d'alarme (12', 14', 16').

12. Procédé selon l'une quelconque des revendications précédentes, **caractérisé en ce qu'**une vitesse minimale du véhicule ferroviaire sert de grandeur directrice.

13. Procédé selon l'une quelconque des revendications précédentes, **caractérisé en ce que** les signaux, les exploitations et/ou les messages sont sauvegardés pendant un laps de temps pouvant être choisi.

14. Procédé selon la revendication 13, **caractérisé en ce que** la sauvegarde des données dans une mémoire intermédiaire a lieu pendant un déplacement du véhicule ferroviaire et que les données sont transcrites sur une mémoire de disque dur ou similaire à l'arrêt du véhicule ferroviaire.

15. Dispositif de surveillance des caractéristiques de circulation de véhicules ferroviaires et de diagnostic de composants de véhicules ferroviaires, **caractérisé par** des premiers moyens d'enregistrement de paramètres de fonctionnement du véhicule ferroviaire ou de composants du véhicule ferroviaire, des deuxièmes moyens d'association en parallèle des paramètres de fonctionnement à différents niveaux de surveillance (12, 14, 16) d'un système de surveillance (10), des troisièmes moyens permettant dans les niveaux de surveillance (12, 14, 16) des algorithmes d'exploitation identiques et/ou différents des signaux correspondant aux paramètres de fonctionnement ainsi que des quatrièmes moyens de génération de messages (12', 14', 16') ou actions associés à l'exploitation dans les niveaux de surveillance (12, 14, 16).
